# EUROPEAN PATENT APPLICATION

(11) **EP 2 873 956 A2**
(43) Date of publication of application: **20.05.2015**
(21) Application number: 14158423.5
(22) Date of filing: 07.03.2014
(51) Int. Cl.: G01K 1/14

(54) **Booster cable device for motor vehicle**

(30) Priority: 18.11.2013 CN 201320729037 U
(71) Applicant: Shanghai Guangwei Electric & Tools Co., Ltd, Shanghai 200241 (CN)
(72) Inventor: Di Yu, 200241 Shanghai (CN); Qian Shi, 200241 Shanghai (CN); JianBo Wang, 200241 Shanghai (CN)
(74) Representative: Albrecht, Ralf

(57) **Abstract**

Booster cable device (1) for electrical connection of two batteries or accumulators of motor vehicles having at least one cable comprising a conductor surrounded by an insolation layer (6, 7; 30, 31), wherein the insolation layer (6; 30) is provided with a temperature warning color element (20; 33), which is disposed externally detectable and generates a reversible discoloration as a function of the temperature of the conductor (21; 28, 29).

## Description

The invention refers to a booster cable device for electrical connection of two batteries or accumulators of motor vehicles having at least one cable comprising a conductor surrounded by an insolation layer.

Booster cable devices are used for transferring electrical energy from a host battery to a receiving battery installed in a motor vehicle. Such a host battery enables to start the motor of the motor vehicle in the event that the receiving battery is too weak to supply enough energy to the starter. In general, a booster cable device comprises two cables consisting of a conductor made of metal and an insolation layer surrounding the conductor and made of a polymer, respectively. Both ends of each conductor are provided with clamps whereby the terminals of the two batteries can be connected.

In specific circumstances, the conductors of the booster cable device is subject to high electrical current resulting in a substantial rise of temperature of the conductors and hence, of the insolation layer. The consequence might be short circuiting and faster aging particularly of the insolation material. Moreover, touching of the hot insolating layer without protection may hurt the skin of a user substantially and cause pain.

It is an object of the present invention to overcome these disadvantages, i.e. to provide a solution which reduces the danger of impairing the function of the booster cable device and the danger of hurting a user of the device substantially.

The object is achieved through a booster cable device wherein the insolation layer is provided with a temperature warning color element, preferably configured as a reversible thermo-chromic element, which is disposed externally detectable and generates a reversible discoloration as a function of the temperature of the conductor. Thus, it is the basic idea of the invention to use a passive element configured as a reversible thermo-chromic element, which change colors as a function of the temperature of the conductor. Due to the temperature warning color element, an individual using the booster cable device in question is able to detect rise of the temperature of the cable or cables very fast and early so that he can interrupt the connection between the two batteries in order to protect the cables and to avoid short circuiting. Moreover, the user is warned to come into unprotected contact with the cables of the booster cable device and hence, avoids harm to his/her body, arms or hands. It reminds the user to keep their naked hands away from the cable before it returns to the normal temperature again.

Materials for the temperature warning color element, i.e. for thermo-chromic elements are known. The color changes of such elements associated with temperature changes are based on changes of the molecule- or crystal structure. It is known to use inorganic compounds like rutile and zinc-oxide for this purpose. However, there are also organic compounds. Examples can be derived from DE 10 2008 011 444 A1 and DE 103 39 442 A1.

The temperature warning color element according to the invention may be embodied in any configuration and extension. A preferred embodiment is to configure the element as a strip extending parallel to the axes of the cable, particularly extending about the entire length of the insolation layer. This does not exclude other forms of the temperature warning color elements like a row of points or rings divided about the length of the cable.

It is preferred that the temperature warning color element is in contact with the conductor so that the element receives the heat of the conductor directly and is accordingly heated by the conductor with any delay. So, the user of the booster cable device is informed about any rise of the temperature of the cables immediately and can interrupt the connection between the two batteries before the insolation layer reaches a temperature, which could be harmful for its service life and could be dangerous for the skin of the user. Preferably, the temperature warning color element should extend between the outside of the insolation layer and conductor so that the outside of the element is flush with the outside of the insolating layer.

In most cases, a booster cable device comprises two cables, namely a first and a second cable both of them having a conductor surrounded by an insolation layer, respectively. In accordance with the invention, it is preferred that the two cables are connected in parallel, for example through a linking part providing a distance between the two cables. In such a case, the temperature warning color element should be provided on the side of the insolation layer opposite to the linking part so that the element is good visible.

According to another feature of the present invention, not only one of the cables is provided with the temperature warning element, but both of the cables, preferably in an identical manner and configuration. So it is ensured that the user of the booster cable device is able to observe at least one of the temperature warning color element indicating the current temperature of the cables and warning the user in the event that the color changes substantially due to rise of temperature of the conductors.

The temperature warning color elements should be formed integrally with the insolation layer so that it is part of the insolation layer. It is possible to form the cable or cables by injection molding in one mold.

The invention is described in more detail based on two embodiments with reference to the drawing figures, wherein
- Figure 1: illustrates a booster cable device according to the invention;
- Figure 2: illustrates a cross section of one cable of the booster cable device according to figure 1;
- Figure 3: illustrates a second embodiment of the cables of a booster cable device according to the invention; and
- Figure 4: illustrates a cross section through the cables according to figure 3.

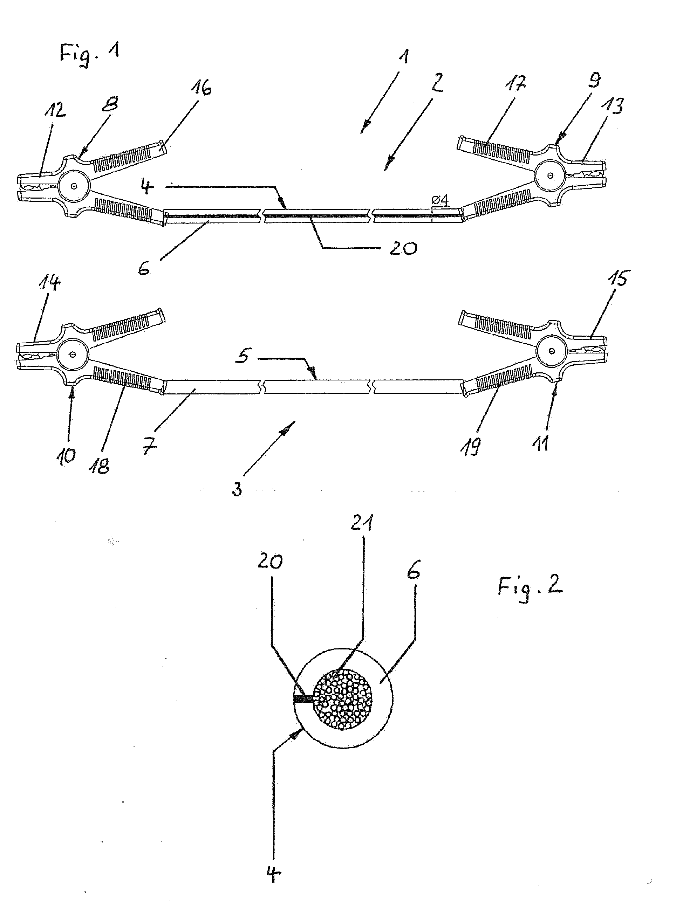

Figure 1 illustrates a first embodiment of a booster cable device 1 consisting of two separate booster cable units 2, 3 which are embodied substantially identically. They comprise a cable 4, 5, respectively, which consist of a conductor made of metal (not visible) surrounded by an insolation layer 6, 7, respectively.

The ends of the cables 4, 5 are connected with nippers 8, 9, 10, 11 each having a pair of tongs 12, 13, 14, 15, respectively, which bear electrical contacts connected with the conductors of the cables 4, 5. Each pair of tongs 12, 13, 14, 15 can be operated by handles of tongs 16, 17, 18, 19 whereby the pair of tongs 12, 13, 14, 15 can be spreaded from a closed position as shown in figure 1 to an open position wherein a connection between the terminals of two batteries can be effected in a usual manner.

Cable 4 of booster cable unit 2 comprises a temperature warning color strip 20 extending about the entire length of cable 4 and visible externally. The temperature warning color strip 20 is made of a material having reversible thermal-chromic properties, i.e. it changes its color as a function of its temperature which can be observed by a user of the booster cable device 1. The color change can also include an intensity change of a particular color.

Figure 2 illustrates cable 4 in a cross sectional view. It is recognizable that the core of cable 4 is formed by a conductor 21 having a circular cross section and made of a metal like copper or aluminum. Conductor 21 is surrounded by the insolation layer 6 made of a suitable polymer the thickness of which is equal about the entire circumference. The insolation layer 6 has a slot on the upper side into which the temperature warning color strip 20 is embedded such that the temperature warning color strip 20 has contact with the conductor 21 on the inside and that it is flush with the outside of the insolation layer 6. Hence, rise of temperature of the conductor 21 is transferred immediately to the temperature warning color strip 20 without delay and results in a substantial change of color of the temperature warning color strip 20.

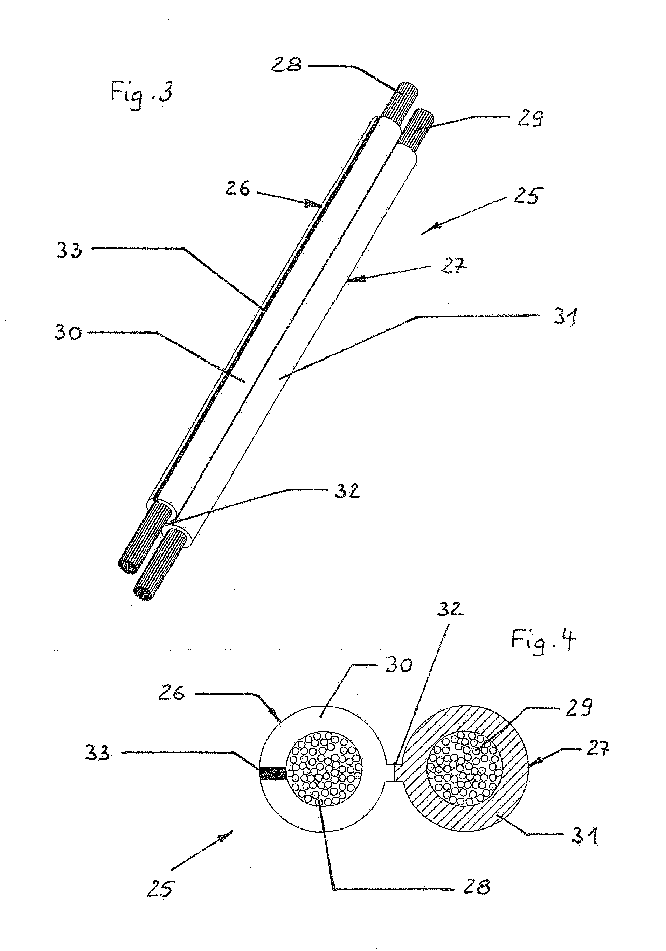

Figure 3 illustrates a cable unit 25 provided for a second embodiment of a booster cable device. The cable unit 25 comprises two cables 26, 27 consisting of a conductor 28, 29 surrounded by an insolation layer 30, 31, respectively. The conductors 28, 29 protrude over the ends of the insolation layer 30, 31 for connecting with a pair of tongs as shown in figure 1, which are omitted in figure 3.

As better recognizable in figure 4, the insolation layers 30, 31 are connected by a linking part 32 extending about the entire length of the cables 26, 27 and holding the cables 26, 27 at a distance and parallel to each other. The linking part 32 is made of the material of the insolation layers 30, 31.

Left cable 26 comprises a temperature warning color strip 33 extending about the entire length of the insolation layer 30 and visible externally. Also in this embodiment, the temperature warning color strip 33 is made of a material having reversible thermal-chromic properties such that it changes its color as a function of its temperature. The temperature warning strip 33 is embedded in a slot of the insolation layer 30 such that the temperature warning color strip 33 has contact with the conductor 28 on the inside and that it is flush with the outside of the insolation layer 30.

## Claims

1. Booster cable device (1) for electrical connection of two batteries or accumulators of motor vehicles having at least one cable comprising a conductor surrounded by an insolation layer (6, 7; 30, 31), **characterized in that** the insolation layer (6; 30) is provided with a temperature warning color element (20; 33), which is disposed externally detectable and generates a reversible discoloration as a function of the temperature of the conductor (21; 28, 29).

2. Booster cable device according to claim 1, **characterized in that** the temperature warning color element (20; 33) is configured as a reversible thermo-chromic element.

3. Booster cable device according to claim 1 or 2, **characterized in that** the temperature warning color element (20; 33) is embodied as a strip, particularly extending about the entire length of the insolation layer (6; 30).

4. Booster cable device according to one of claims 1 to 3, **characterized in that** the temperature warning color element (20; 33) is in contact with the conductor (21; 28).

5. Booster cable device according to one of claims 1 to 4, **characterized in that** the temperature warning color element (20; 33) extends between the outside of the insolation layer (6; 30) and the conductor (21; 28).

6. Booster cable device according to one of claims 1 to 5, **characterized in that** the booster cable device comprises a first and a second cable (26, 27) both of them having a conductor (28, 29) surrounded by an insolation layer (30, 31) respectively, wherein the two cables (26, 27) are connected in parallel.

7. Booster cable device according to claim 6, **characterized in that** the connection between the two cables (26, 27) are made through a linking part (32).

8. Booster cable device according to claim 7, **characterized in that** the temperature warning color element (33) is provided on the side of the insolation layer (30) opposite to the linking part (32).

9. Booster cable device according to one of claims 6 to 8, **characterized in that** both of the cables are provided with a temperature warning color element as claimed in one of claims 1 to 5.

10. Booster cable device according to one of claims 1 to 9, **characterized in that** the temperature warning color element is embedded integrally with the insolation layer (6; 30).
